# EUROPÄISCHE PATENTSCHRIFT

(11) **EP 1 184 223 B1**
(45) Veröffentlichungstag und Bekanntmachung des Hinweises auf die Patenterteilung: **27.09.2006**
(21) Anmeldenummer: 01119289.5
(22) Anmeldetag: 10.08.2001
(51) Int. Cl.: B60R 1/076

(54) **Aussenrückblickspiegel für Kraftfahrzeuge**
Vehicle exterior rear view mirror
Rétroviseur extérieur de véhicule

(30) Priorität: 31.08.2000 DE 20015125 U
(43) Veröffentlichungstag der Anmeldung: 06.03.2002
(73) Patentinhaber: Schefenacker Vision Systems Germany GmbH, 71409 Schwaikheim (DE)
(72) Erfinder: Apfelbeck, Robert, 94447 Plattling (DE)
(74) Vertreter: Kohl, Karl-Heinz

(56) Entgegenhaltungen:
- DE-A- 3 819 471
- DE-A- 3 923 922
- DE-A- 3 935 632
- DE-A- 19 623 885
- DE-C- 4 004 686
- US-A- 5 477 390

## Beschreibung

Die Erfindung betrifft einen Außenrückblickspiegel für Fahrzeuge, vorzugsweise für Kraftfahrzeuge, nach dem Oberbegriff des Anspruches 1.

Bei Außenrückblickspiegeln kann der Spiegelkopf aus der Gebrauchslage entgegen Fahrtrichtung des Fahrzeuges nach hinten in eine Parkstellung geschwenkt werden. In der Parkstellung kann es jedoch vorkommen, daß sich der Spiegelkopf unbeabsichtigt relativ zum Spiegelfuß bewegt, wodurch er beschädigt werden kann.

Bei einem gattungsgemäßen Außenrückblickspiegel (DE 39 35 632 A1) wird die Haltekraft,mit der der Spiegelkopf in der Parkstellung gehalten wird, durch die Kraft eines Motors erzeugt, der über ein Gestänge mit dem Spiegelkopf verbunden ist. Das Gestänge hat eine schwenkbar am Spiegelfuß gelagerte Kurvenscheibe, an der ein Ende einer Zugfeder angreift, deren anderes Ende mit einem Träger des Spiegelkopfes verbunden ist. An der Kurvenscheibe ist außerdem ein Ende eines stangenförmigen Übertragungsgliedes angelenkt, dessen anderes Ende an einen Exzenter angelenkt ist, der durch den Motor geschwenkt werden kann.

Die Erfindung liegt die Aufgabe zugrunde, den gattungsgemäßen Außenrückblickspiegel so auszubilden, daß der Spiegelkopf wenigstens in der Parkstellung einwandfrei in seiner Lage gehalten ist.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel wird der Spiegelkopf in der Parkstellung durch die Haltekraft gesichert, die durch das Zwischengelenk erzeugt wird. Es hat den Formteil, der am Rand der Kurvenscheibe anliegt und an dem die Kurvenscheibe in der Parkstellung abgestützt ist. Die Haltekraft sorgt dafür, daß der Spiegelkopf in der abgeklappten Parkstellung in der Ruhestellung gehalten wird, so daß unerwünschte Bewegungen des Spiegelkopfes in der Parkstellung vermieden werden. Die Haltekraft kann vorteilhaft auch in der Gebrauchsstellung des Spiegelkopfes wirksam sein, so daß auch in dieser Lage des Spiegelkopfes unerwünschte Bewegungen zuverlässig verhindert werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: im Querschnitt einen erfindungsgemäßen Außenrückblickspiegel, dessen Spiegelkopf eine Gebrauchslage einnimmt,
- Fig. 2: eine Halteeinrichtung des erfindungsgemäßen Außenrückblickspiegels,
- Fig. 3: im Schnitt den Außenrückblickspiegel gemäß Fig. 1, jedoch ohne Verkleidung des Spiegelkopfes,
- Fig. 4: den erfindungsgemäßen Außenrückblickspiegel, dessen Spiegelkopf eine Parkstellung einnimmt,
- Fig. 5: einen Teil des Außenrückblickspiegels gemäß Fig. 5 mit der Halteeinrichtung.

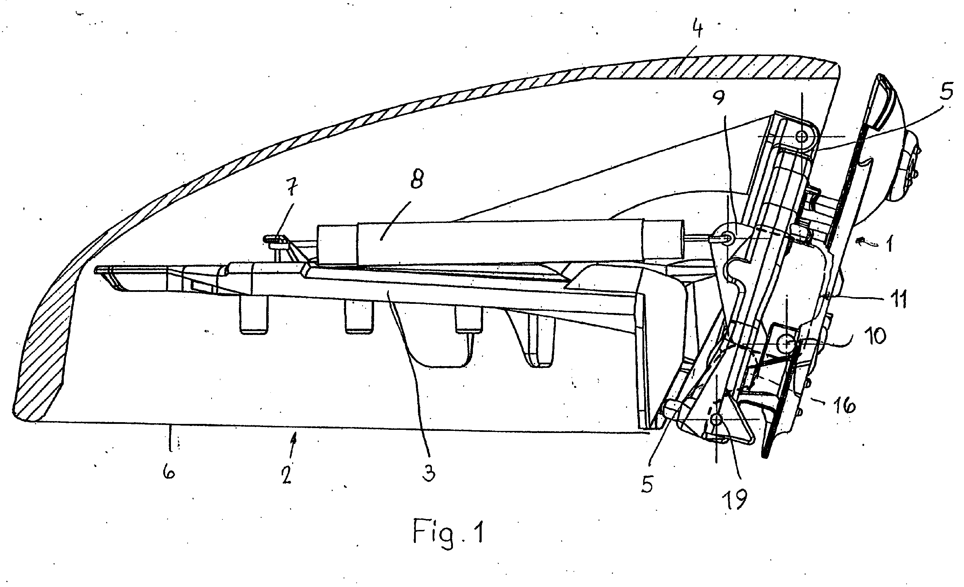

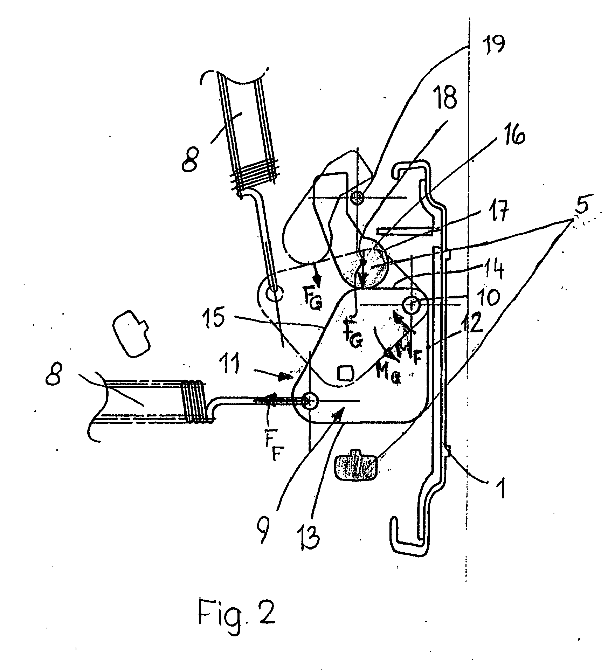

Der Außenrückblickspiegel hat einen Spiegelfuß 1, mit dem er in bekannter Weise am Kraftfahrzeug befestigt wird. Der Außenrückblickspiegel ist außerdem mit einem Spiegelkopf 2 versehen, der relativ zum Spiegelfuß 1 aus einer in Fig. 1 dargestellten Gebrauchslage in und entgegen Fahrtrichtung des Kraftfahrzeuges verschwenkt werden kann. Der Spiegelkopf 2 hat einen Träger 3, der in einem Gehäuse 4 untergebracht ist. Der Träger 3 ist über ein Zwischengelenk 5 mit dem Spiegelfuß 1 gelenkig verbunden (Fig. 2). Auf dem Träger 3 ist ein (nicht dargestellter) Motor zum Verstellen eines (nicht dargestellten) Spiegelglasträgers gelagert. Auf der von der das Spiegelglas aufnehmenden Öffnung 6 des Gehäuses 4 abgewandten Rückseite ist der Träger 3 mit einem abstehenden Einhängeteil 7 versehen, in den das eine Ende einer Zugfeder 8 eingehängt ist. Ihr anderes Ende ist in eine Kurvenscheibe 9 eingehängt, die um eine am Spiegelfuß 1 vorgesehene Achse 10 schwenkbar ist. Die Schwenkachse 10 erstreckt sich senkrecht zur Fahrtrichtung des Fahrzeuges.

Die Kurvenscheibe 9 ist Teil einer Halteeinrichtung 11, mit welcher der Spiegelkopf 2 in der Parkstellung gesichert wird. Wie Fig. 2 zeigt, hat die Kurvenscheibe 9 einen dem Spiegelfuß 1 zugewandten geraden Rand 12, der an beiden Enden jeweils bogenförmig gekrümmt in rechtwinklig zu ihm liegende Ränder 13 und 14 der Kurvenscheibe 9 übergeht. Der Rand 14 ist kürzer als der gegenüberliegende und parallel zu ihm verlaufende Rand 13. Beide gerade Ränder 13, 14 gehen jeweils bogenförmig gekrümmt in einen geraden Rand 15 über, der in der Gebrauchslage (ausgezogene Linien in Fig. 2) des Spiegelkopfes 2 in bezug auf den Spiegelfuß 1 in Richtung auf die Gehäuseöffnung 6 divergierend verläuft. Die spiegelfußfeste Schwenkachse 10 ist im Übergangsbereich zwischen den beiden Rändern 12 und 14 vorgesehen. Die Zugfeder 8 ist im Eckbereich zwischen den Rändern 13 und 15 in die Kurvenscheibe 9 eingehängt.

Das Zwischengelenk 5 ist mit einem Nocken 16 versehen, der in der Gebrauchslage des Spiegelkopfes 2 am Rand 14 der Kurvenscheibe 9 anliegt. Der Nocken 16 hat eine auf einem gedachten Zylindermantel liegende Mantelfläche 17, mit der er am Rand 14 der Kurvenscheibe 9 anliegt. Die Krümmungsachse 18 der Mantelfläche 17 liegt parallel zur Schwenkachse 10 der Kurvenscheibe 9. Der Nocken 17 ist vorteilhaft einstückig am Zwischengelenk 5 vorgesehen, kann jedoch auch gesondert an ihm befestigt sein. Der Nocken 16 stützt die Kurvenscheibe 9 gegen die von der Zugfeder 8 ausgeübte Federkraft F_{F} ab. Die Gegenkraft F_{G} am Nocken 16 liegt senkrecht zur Federkraft F_{F} (Fig. 2). Die Federkraft F_{F} erzeugt an der Kurvenscheibe 9 ein Drehmoment M_{F} um die Schwenkachse 10, während die Gegenkraft F_{G} zu einem entsprechenden Gegendrehmoment M_{G} um die Schwenkachse 10 führt. Die Gegenkraft F_{G} sorgt dafür, daß der Spiegelkopf 2 in Ruhe bleibt. Durch die Zugfeder 8 wird die Kurvenscheibe 9 fest gegen den Nocken 16 des Zwischengelenkes 5 gedrückt, so daß eine optimale Ruhelage in der Gebrauchsstellung des Spiegelkopfes 2 gewährleistet ist. In der Gebrauchsstellung ist das Drehmoment M_{G} größer als das Drehmoment M_{F}.

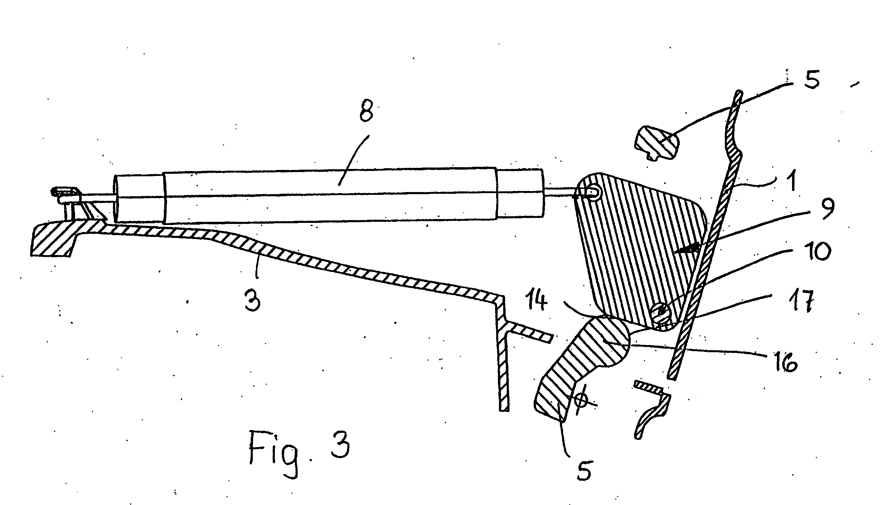

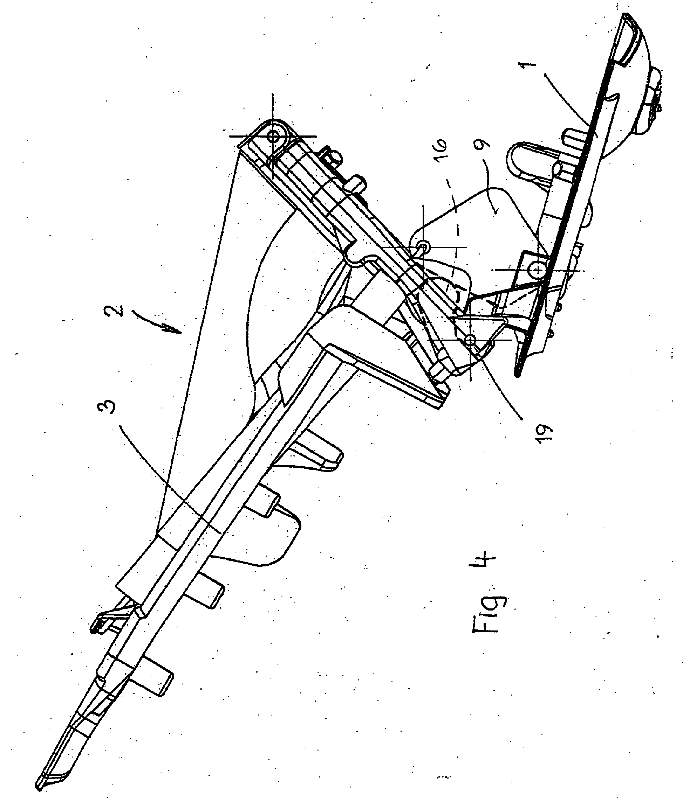

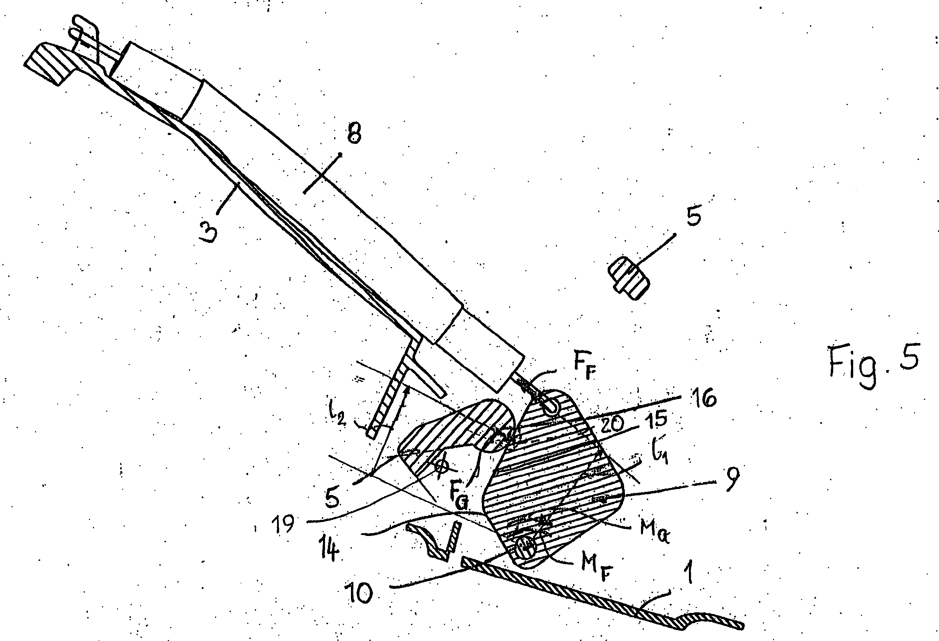

Der Spiegelkopf 2 kann aus der Gebrauchslage gemäß den Fig. 1 und 3 in die Parkstellung gemäß den Fig. 4 und 5 verschwenkt werden. Hierbei wird der Spiegelkopf 2 mit dem Zwischengelenk 5 um eine am Spiegelfuß 1 vorgesehene Achse 19 geschwenkt, die parallel zur Schwenkachse 10 verläuft und in Fahrtrichtung des Fahrzeuges mit Abstand vor der Schwenkachse 10 angeordnet ist. In Fig. 2 ist die Lage der Kurvenscheibe 9 und der Nocke 16 sowie des Zwischengelenks 5 in der Parkstellung mit gestrichelten Linien angegeben. Bei dem Schwenkvorgang des Spiegelkopfes 2 wird die Zugfeder 8 entsprechend mitgenommen und dreht die Kurvenscheibe 9 um die Schwenkachse 10. Da gleichzeitig auch das Zwischengelenk 5 um die Schwenkachse 19 verschwenkt wird, gelangt der Nocken 16 des Zwischengelenks 5 vom Rand 14 auf den stumpfwinklig an ihn anschließenden geraden Rand 15 der Kurvenscheibe. Dadurch wird erreicht, daß auch in der Parkstellung der Nocken 16 die Gegenkraft F_{G} auf die Kurvenscheibe 9 ausübt, die der von der Zugfeder 8 ausgeübten Federkraft F_{F} entgegengerichtet ist. Somit wirken auch in der Parkstellung des Spiegelkopfes 2 die entgegengesetzt zueinander gerichteten Drehmomente M_{F} und M_{G}, so daß der Spiegelkopf 2 in der Parkstellung einwandfrei in Ruhestellung gehalten wird. In der Parkstellung ist das Drehmoment M_{G} kleiner als das Drehmoment M_{F}. Da der Nocken 16 die gekrümmte Mantelfläche 17 aufweist, gelangt er beim Verschwenken der Kurvenscheibe 9 und des Zwischengelenkes 5 einwandfrei vom Rand 14 auf den Rand 15 der Kurvenscheibe 9.

Der senkrechte Abstand I₁ zwischen der Schwenkachse 10 der Kurvenscheibe 9 und der Wirklinie der Federkraft F_{F} ist größer als der senkrechte Abstand I₂ zwischen der Schwenkachse 10 der Kurvenscheibe 9 und der Wirklinie der vom Nocken 16 ausgeübten Gegenkraft F_{G}.

Im dargestellten Ausführungsbeispiel ist in der Parkstellung das Drehmoment M_{G} aufgrund der Geometrie der Kurvenscheibe 9 und des Nockens 16 sowie der Krafteinleitung kleiner als das auf die Zugfeder 8 zurückzuführende Drehmoment M_{F}, dem die Kurvenscheibe 9 unterworfen ist.

Es ist auch möglich, den Spiegelkopf 2 in Ruhestellung zu halten, wenn an der Kurvenscheibe 9 im Rand 15 eine Vertiefung 20 (Fig. 5) angebracht wird, in welche die am Zwischengelenk 5 vorgesehene Kontur, im Ausführungsbeispiel die Nocke 16, formschlüssig eingreift.

Es ist selbstverständlich möglich, die Vertiefung 20 im Rand 15 der Kurvenscheibe 9 auch zusammen mit den beschriebenen Kraft- und Drehmomentverhältnissen vorzusehen. Die Vertiefung 20 ist vorteilhaft an die Außenform der Kontur am Zwischengelenk 5 angepaßt, so daß in der Parkstellung diese Kontur des Zwischengelenkes 5 flächig am Boden der Vertiefung 20 anliegt.

## Patentansprüche

1. Außenrückblickspiegel für Fahrzeuge, vorzugsweise für Kraftfahrzeuge, mit einem Spiegelfuß (1) und einem Spiegelkopf (2), der aus einer Gebrauchslage in eine Parkstellung schwenkbar und zumindest in der Parkstellung durch eine Haltekraft (F_{G}) gesichert ist, die einer Federkraft (F_{F}) entgegenwirkt, durch die der Spiegelkopf (2) belastet ist, der mit einer Kurvenscheibe (9) versehen ist, die am Spiegelfuß (1) schwenkbar gelagert ist und an der ein Ende einer Zugfeder (8) angreift, deren anderes Ende an einem Träger (3) des Spiegelkopfes (2) befestigt ist,
**dadurch gekennzeichnet, daß** die Haltekraft (F_{G}) durch ein Zwischengelenk (5) erzeugt ist, das wenigstens einen Formteil (16) aufweist, der am Rand der Kurvenscheibe (9) anliegt und an dem die Kurvenscheibe (9) in der Parkstellung abgestützt ist.

2. Außenrückblickspiegel nach Anspruch 1,
**dadurch gekennzeichnet, daß** die Kurvenscheibe (9) auch in der Gebrauchsstellung am Formteil (16) abgestützt ist.

3. Außenrückblickspiegel nach Anspruch 1 oder 2,
**dadurch gekennzeichnet, daß** die Schwenkachse (10) der Kurvenscheibe (9) parallel zur Schwenkachse des Spiegelkopfes (2) liegt.

4. Außenrückblickspiegel nach einem der Ansprüche 1 bis 3,
**dadurch gekennzeichnet, daß** der Spiegelkopf (2) am Zwischengelenk (5) vorgesehen ist, das um eine am Spiegelfuß (1) vorgesehene Schwenkachse (19) schwenkbar ist.

5. Außenrückblickspiegel nach einem der Ansprüche 1 bis 4,
**dadurch gekennzeichnet, daß** das vorteilhaft einstückig mit dem Zwischengelenk (5) ausgebildete Formteil (16) eine teilzylindrische Mantelfläche (17) aufweist, mit der es an der Kurvenscheibe (9) anliegt.

6. Außenrückblickspiegel nach einem der Ansprüche 1 bis 5,
**dadurch gekennzeichnet, daß** die Haltekraft (F_{G}) und die Federkraft (F_{F}) entgegengesetzt zueinander gerichtete Drehmomente (M_{G}, M_{F}) auf die Kurvenscheibe (9) ausüben.

7. Außenrückblickspiegel nach Anspruch 6,
**dadurch gekennzeichnet, daß** das von der Zugfeder (8) erzeugte Drehmoment (M_{F}) in der Gebrauchsstellung kleiner ist als das durch das Zwischengelenk (5) hervorgerufene Drehmoment (M_{G}).

8. Außenrückblickspiegel nach einem der Ansprüche 1 bis 7,
**dadurch gekennzeichnet, daß** der vorteilhaft mit einer wenigstens eine Rastvertiefung (20) für das Zwischengelenk (5) aufweisenden Kurvenscheibe (9) versehene Spiegelkopf (2) in der Parkstellung rastend mit dem Zwischengelenk (5) verbunden ist, das schwenkbar am Spiegelfuß (1) gelagert ist.

9. Außenrückblickspiegel nach Anspruch 8,
**dadurch gekennzeichnet, daß** das Zwischengelenk (5) mit dem Formteil (16) in die Rastvertiefung (20) eingreift.

## Claims

1. Vehicle exterior rearview mirror, preferably for motor vehicles, with a mirror base (1) and a mirror head (2) which may be pivoted from a position of use into a parked position and, at least in the parked position, is secured by a securing force (F_{G}) which counteracts a spring force (F_{F}), by means of which the mirror head (2) is loaded, which is provided with a cam disc (9) which is pivotably mounted on the mirror base (1) and on which one end of a tension spring (8) acts, of which the other end is fastened to a support (3) of the mirror head (2),
**characterized in that** the securing force (F_{G}) is produced by an intermediate joint (5) which comprises at least one shaped part (16) which bears against the edge of the cam disc (9) and on which the cam disc (9) is supported in the parked position.

2. Exterior rearview mirror according to Claim 1, **characterized in that** the cam disc (9) is also supported in the position of use on the shaped part (16).

3. Exterior rearview mirror according to Claim 1 or 2, **characterized in that** the pivot axis (10) of the cam disc (9) is located parallel to the pivot axis of the mirror head (2).

4. Exterior rearview mirror according to any one of Claims 1 to 3, **characterized in that** the mirror head (2) is provided on the intermediate joint (5) which may be pivoted about a pivot axis (19) provided on the mirror base (1).

5. Exterior rearview mirror according to any one of Claims 1 to 4, **characterized in that** the shaped part (16), advantageously formed integrally with the intermediate joint (5), has a partially cylindrical peripheral surface (17) with which it bears against the cam disc (9).

6. Exterior rearview mirror according to any one of Claims 1 to 5, **characterized in that** the securing force (F_{G}) and the spring force (F_{F}) exert oppositely oriented torques (M_{G}, M_{F}) on the cam disc (9).

7. Exterior rearview mirror according to Claim 6, **characterized in that**, in the position of use, the torque (M_{F}) produced by the tension spring (8) is smaller than the torque (M_{G}) produced by the intermediate joint (5).

8. Exterior rearview mirror according to any one of Claims 1 to 7, **characterized in that** the mirror head (2) advantageously provided with a cam disc (9) comprising at least one latching recess (20) for the intermediate joint (5) is connected in the parked position in a latching manner to the intermediate joint (5) which is pivotably mounted on the mirror base (1).

9. Exterior rearview mirror according to Claim 8, **characterized in that** the intermediate joint (5) engages with the shaped part (16) in the latching recess (20).

## Revendications

1. Rétroviseur extérieur pour véhicules, notamment pour véhicules automobiles, comprenant un pied de rétroviseur (1) et une tête de rétroviseur (2), que l'on peut faire pivoter d'une position d'utilisation dans une position de parking ou de stationnement, et qui est bloquée, au moins dans la position de stationnement, par une force de maintien (F_{G}) agissant à l'encontre d'une force de ressort (F_{F}) par laquelle est sollicitée ou chargée la tête de rétroviseur (2), le rétroviseur comportant également un disque de came (9) qui est monté pivotant sur le pied de rétroviseur (1) et sur lequel agit une extrémité d'un ressort de traction (8) dont l'autre extrémité est fixée à un support (3) de la tête de rétroviseur (2),
**caractérisé en ce que** la force de maintien (F_{G}) est engendrée par une articulation intermédiaire (5) qui présente au moins une pièce de forme (16) qui s'applique sur le bord du disque de came (9) et contre laquelle s'appuie le disque de came (9) dans la position de stationnement.

2. Rétroviseur extérieur selon la revendication 1,
**caractérisé en ce que** le disque de came (9) est également en appui sur la pièce de forme (16) dans la position d'utilisation.

3. Rétroviseur extérieur selon la revendication 1 ou 2,
**caractérisé en ce que** l'axe de pivotement (10) du disque de came (9) s'étend parallèlement à l'axe de pivotement de la tête de rétroviseur (2).

4. Rétroviseur extérieur selon l'une des revendications 1 à 3,
**caractérisé en ce que** la tête de rétroviseur (2) est prévue sur l'articulation intermédiaire (5) qui peut pivoter autour d'un axe de pivotement (19) prévu sur le pied de rétroviseur (1).

5. Rétroviseur extérieur selon l'une des revendications 1 à 4,
**caractérisé en ce que** la pièce de forme (16), avantageusement réalisée d'un seul tenant avec l'articulation intermédiaire (5), présente une surface périphérique (17) partiellement cylindrique avec laquelle elle s'applique sur le disque de came (9).

6. Rétroviseur extérieur selon l'une des revendications 1 à 5,
**caractérisé en ce que** la force de maintien (F_{G}) et la force de ressort (F_{F}) exercent des couples (M_{G}, M_{F}) de sens opposés sur le disque de came (9).

7. Rétroviseur extérieur selon la revendication 6,
**caractérisé en ce que** le couple (M_{F}) engendré par le ressort de traction (8) dans la position d'utilisation est inférieur au couple (M_{G}) produit par l'articulation intermédiaire (5).

8. Rétroviseur extérieur selon l'une des revendications 1 à 7,
**caractérisé en ce que** la tête de rétroviseur (2) avantageusement pourvue d'un disque de came (9) présentant au moins un creux d'encliquetage (20) pour l'articulation intermédiaire (5), est reliée par encliquetage, dans la position de stationnement, avec l'articulation intermédiaire (5) qui est montée pivotante sur le pied de rétroviseur (1).

9. Rétroviseur extérieur selon la revendication 8,
**caractérisé en ce que** l'articulation intermédiaire (5) s'engage avec la pièce de forme (16) dans le creux d'encliquetage (20).
